# DEMANDE DE BREVET EUROPEEN

(11) **EP 4 729 362 A1**
(43) Date de publication de la demande: **22.04.2026**
(21) Numéro de dépôt: 25208516.2
(22) Date de dépôt: 14.10.2025
(51) Int. Cl.: B60R 13/04

(54) **ELÉMENT DE GARNISSAGE EXTÉRIEUR DE VÉHICULE COMPRENANT UN ÉLÉMENT DE REVÊTEMENT COLLÉ SUR UN CORPS PRINCIPAL**

(30) Priorité: 16.10.2024 FR 2411195
(71) Demandeur: Flex-N-Gate France, 25405 Audincourt (FR)
(72) Inventeur: BARNEOUD, Mathieu, 25230 VANDONCOURT (FR); DUQUESNOY, David, 70400 CHALONVILLARS (FR)
(74) Mandataire: Lavoix

(57) **Abrégé**

L'élément de garnissage extérieur (1) comprend :
- un corps principal (2) comprenant une face externe (8),
- au moins un élément de revêtement (4) s'étendant entre une face interne (24), et une face externe (26), l'élément de revêtement (4) s'étendant sur une partie de la face externe (8) du corps principal (2).

L'élément de revêtement (4) est collé sur le corps principal (2) par l'intermédiaire d'une couche de liaison (32) et d'une colle (34) interposées entre la face externe (8) du corps principal (2) et la face interne (24) de l'élément de revêtement (4), ladite couche de liaison (32) étant désactivable par apport de chaleur de sorte à permettre de séparer la face interne (24) de l'élément de revêtement (4) et/ou la face externe (8) du corps principal (2) de la colle (34).

## Description

La présente invention concerne un élément de garnissage extérieur de véhicule, du type comprenant :
- un corps principal comprenant une face externe destinée à être tournée vers l'extérieur du véhicule,

- au moins un élément de revêtement s'étendant entre une face interne, tournée vers la face externe du corps principal, et une face externe, opposée à la face interne et destinée à être tournée vers l'extérieur du véhicule, l'élément de revêtement s'étendant sur au moins une partie de la face externe du corps principal.

Un tel élément de garnissage extérieur forme par exemple un hayon arrière de véhicule ou un autre élément de carrosserie d'un véhicule.

Un tel élément de garnissage extérieur comprend généralement un corps principal formant un support structurel, conférant sa forme et sa rigidité à l'élément de garnissage extérieur, et un élément de revêtement fixé sur le corps principal pour être visible depuis l'extérieur du véhicule et conférer son aspect à l'élément de garnissage extérieur.

L'élément de revêtement est par exemple fixé par des éléments de fixation mécanique sur le corps principal, tels que des vis ou autre, ce qui rend l'élément de garnissage extérieur démontable mais alourdit celui-ci du fait de la présence des éléments de fixation. En outre, de tels éléments de fixation ne permettent pas d'assurer une étanchéité satisfaisante entre le corps principal et l'élément de revêtement.

En variante l'élément de revêtement peut être collé sur le corps principal de sorte à alléger l'élément de garnissage extérieur et à assurer une étanchéité entre l'élément de revêtement et le corps principal. Cependant, dans ce cas, la séparation de l'élément de revêtement du corps principal est compliquée, voire impossible, ce qui n'est pas satisfaisant en termes de réparabilité et ou de démontage en fin de vie de l'élément de garnissage extérieur, notamment en vue du recyclage des différentes pièces de l'élément de garnissage extérieur.

L'un des buts de l'invention est de pallier ces inconvénients en proposant un élément de garnissage extérieur léger dont les différents éléments peuvent être séparés de façon simple.

A cet effet, l'invention concerne un élément de garnissage extérieur du type précité, dans lequel l'élément de revêtement est collé sur le corps principal par l'intermédiaire d'au moins une couche de liaison et d'une colle interposées entre la face externe du corps principal et la face interne de l'élément de revêtement, ladite couche de liaison étant désactivable par apport de chaleur de sorte à permettre de séparer la face interne de l'élément de revêtement et/ou la face externe du corps principal de la colle et à désassembler l'élément de revêtement du corps principal par chauffage de l'élément de garnissage extérieur.

L'élément de garnissage selon l'invention est particulièrement léger car l'élément de revêtement est collé sur le corps principal et ne nécessite pas d'élément de fixation mécanique. En outre, l'étanchéité entre l'élément de revêtement et le corps principal est ainsi assurée. L'élément de garnissage reste toutefois démontable, par simple chauffage de l'élément de garnissage extérieur ce qui permet de séparer l'élément de revêtement du corps principal en désactivant la couche de liaison. L'élément de garnissage extérieur reste ainsi facilement réparable et recyclable.

L'élément de garnissage extérieur selon l'invention peut en outre comprendre une ou plusieurs des caractéristiques suivantes, considérées seules ou selon toute combinaison techniquement envisageable :
- la couche de liaison est appliquée sur la face externe du corps principal, respectivement sur la face interne de l'élément de revêtement, la colle s'étendant entre la couche de liaison et la face interne de l'élément de revêtement, respectivement la face externe du corps principal ;
- une couche de liaison additionnelle est appliquée sur la face interne de l'élément de revêtement, respectivement sur la face externe du corps principal, la colle s'étendant entre la couche de liaison appliquée sur la face externe du corps principal, respectivement sur la face interne de l'élément de revêtement, et la couche de liaison additionnelle, ladite couche de liaison additionnelle étant désactivable par apport de chaleur.
- l'élément de garnissage extérieur comprend en outre un dispositif d'éclairage s'étendant entre une face interne, tournée vers la face externe du corps principal, et une face externe, opposée à la face interne et tournée vers la face interne de l'élément de revêtement, ledit dispositif d'éclairage étant collé sur le corps principal par l'intermédiaire d'une couche de liaison et d'une colle interposées entre la face externe du corps principal et la face interne du dispositif d'éclairage, ladite couche de liaison étant désactivable par apport de chaleur ;
- au moins une partie de l'élément de revêtement s'étend sur la face externe du dispositif d'éclairage, au moins ladite partie de l'élément de revêtement laissant passer la lumière de la face interne à la face externe de l'élément de revêtement, de sorte que la lumière émise par le dispositif d'éclairage est visible du côté de la face externe de l'élément de revêtement ;
- l'élément de revêtement est réalisé au moins en partie en un matériau transparent ou translucide. ;
- une couche de peinture est appliquée sur la face externe de l'élément de revêtement, ladite couche de peinture comprenant au moins une ouverture traversante s'étendant en regard d'au moins une partie du dispositif d'éclairage, la lumière émise par ledit dispositif d'éclairage traversant l'élément de revêtement et étant visible par ladite ouverture traversante ;
- la couche de liaison comprend un agent dégradable par apport de chaleur, ledit agent dégradable se dégradant sous l'effet d'une température supérieure à un seuil de température prédéterminé et entraînant une perte d'adhésion entre l'adhésif et la surface de la couche de liaison sur laquelle est appliquée la colle ;
- l'élément de garnissage extérieur comprend une pluralité d'éléments de revêtement, chaque élément de revêtement étant collé sur une partie distincte de la face externe du corps principal ;
- l'élément de garnissage extérieur forme un hayon arrière de véhicule.

D'autres aspects et avantages de l'invention apparaîtront plus clairement à la lecture de la description qui va suivre, donnée uniquement à titre d'exemple non limitatif, et faite en référence aux dessins dans lesquels :
[Fig. 1] - la Fig. 1 est une représentation schématique en perspective éclatée d'un élément de garnissage extérieur de véhicule selon l'invention,
[Fig. 2] - la Fig. 2 est une représentation schématique en perspective de l'élément de garnissage extérieur de la Fig. 1 assemblé, et
[Fig 3] - la Fig. 3 est une représentation schématique en coupe d'une partie d'un élément de garnissage extérieur de véhicule selon l'invention.

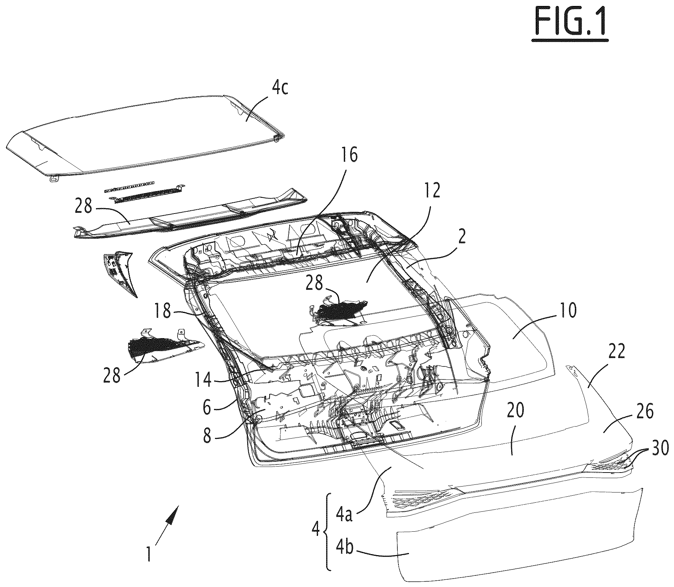

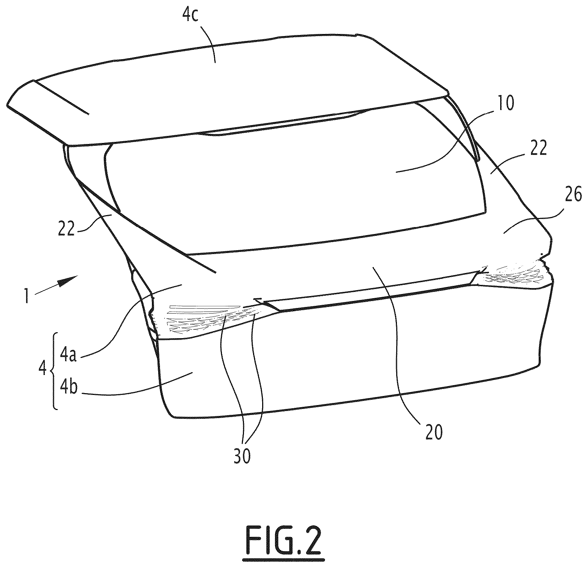

En référence aux Figs. 1 et 2, on décrit un élément de garnissage extérieur 1 de véhicule. De façon générale, cet élément de garnissage extérieur 1 est destiné à être visible depuis l'extérieur du véhicule sur lequel il est monté. Ainsi, l'élément de garnissage extérieure 1 peut être toute pièce de carrosserie ou d'habillage d'une caisse de véhicule. Selon un mode de réalisation, l'élément de garnissage 1 de véhicule est un ouvrant du véhicule, plus particulièrement un hayon arrière de véhicule destiné à fermer l'ouverture d'accès à l'espace de rangement arrière, ou coffre, du véhicule, comme représenté sur la Fig. 2. La suite de la description va être faite en référence à un tel hayon de véhicule, mais il est entendu que l'invention s'applique dès lors que l'élément de garnissage extérieur 1 comprend un corps principal 2 et au moins un élément de revêtement 4 collé de façon réversible sur le corps principal 2, comme cela va être décrit plus en détail ultérieurement.

Le corps principal 2 forme un support structure de l'élément de garnissage extérieur 2, c'est-à-dire qu'il confère sa rigidité et sa forme générale à l'élément de garnissage extérieur 1. A cet effet, le corps principal 2 est par exemple réalisé d'une seule pièce en matière plastique. Le corps principal 2 peut en outre comprendre un ou plusieurs renforts métalliques, par exemple surmoulés par la matière plastique. Le corps principal 2 peut également comprendre des nervures de renfort, comme visible sur la Fig. 1. De façon connue, le corps principal 2 peut être agencé pour recevoir des éléments fonctionnels de l'ouvrant, tels que des éléments optiques, comme cela sera décrit plus en détail ultérieurement, un ou plusieurs faisceaux de câbles électriques, une serrure, etc.

Le corps principal 2 s'étend entre une face interne 6, tournée vers l'intérieur du véhicule lorsque l'élément de garnissage extérieur 1 est monté sur un véhicule, et une face externe 8, opposée à la face interne 6, et tournée vers l'extérieur du véhicule.

Dans le cas d'un hayon arrière de véhicule, le corps principal 2 peut également être agencé pour recevoir une vitre 10, formant par exemple la lunette arrière, permettant de voir au travers du hayon. Pour ce faire, le corps principal 2 définit une ouverture 12 traversant le corps principal 2 de l'extérieur vers l'intérieur. Le corps principal 2 forme un cadre entourant l'ouverture 12 et comprenant notamment un bord inférieur 14, une branche supérieure 16 et deux montants latéraux 18 reliant le bord inférieur 14 à la branche supérieure 16 de part et d'autre de l'ouverture 12.

L'élément de revêtement 4 est agencé pour recouvrir au moins une partie de la face externe 8 du corps principal 2 de sorte à former une partie visible de l'élément de garnissage extérieur 1 depuis l'extérieur du véhicule. Selon le mode de réalisation représenté sur la Fig. 1, l'élément de garnissage extérieur 1 comprend plusieurs éléments de revêtement 4 agencés pour recouvrir l'ensemble de la face externe 8 du corps principal 2 afin que celui-ci ne soit pas visible depuis l'extérieur du véhicule. Ces différents éléments de revêtement 4 sont alors fixés sur des parties distinctes de la face externe 8 du corps principal 2. Ainsi, selon le mode de réalisation représenté sur la Fig. 1, l'élément de garnissage extérieur 1 comprend au moins un élément de revêtement central 4a agencé pour s'étendre sur une partie du bord inférieur 14, longeant l'ouverture 12, et sur les montants latéraux 18, un élément de revêtement inférieur 4b agencé pour s'étendre sur le reste du bord inférieur 14 et un élément de revêtement supérieur 4c agencé pour s'étendre sur la branche supérieure 16. Il est entendu que cet agencement n'est donné qu'à titre d'exemple et que l'élément de garnissage extérieur 1 peut comprendre plus ou moins d'éléments de revêtement 4, notamment en fonction de la forme et de l'agencement du corps principal 2. Chaque élément de revêtement 4 présente une forme sensiblement complémentaire de la forme de la partie du corps principal 2 qu'il recouvre. Ainsi, l'élément de revêtement central 4a comprend par exemple une branche inférieure 20 recouvrant une partie du bord inférieur 14 et deux branches latérales 22 s'étendant de part et d'autre de la branche inférieure 20 selon une direction sensiblement perpendiculaire à celle-ci et recouvrant chacune un des montants latéraux 18.

En dehors de cette forme, chaque élément de revêtement 4 est sensiblement identique de sorte qu'un seul d'entre eux va à présent être décrit plus en détail.

L'élément de revêtement 4 s'étend entre une face interne 24, tournée vers la face externe 8 du corps principal 2, et une face externe 26, destinée à être tournée vers l'extérieur du véhicule de sorte à former la surface visible de l'élément de garnissage extérieur 1 depuis l'extérieur du véhicule.

L'élément de revêtement 4 est réalisé d'une seule pièce, par exemple en matière plastique. Selon un mode de réalisation, notamment lorsqu'un dispositif d'éclairage 28 est installé entre le corps principal 2 et l'élément de revêtement 4 comme cela sera décrit plus en détail ultérieurement, au moins une partie de l'élément de revêtement 4 est agencée pour laisser passer la lumière de la face interne 24 à la face externe 26. A cet effet, l'élément de revêtement 4 est par exemple réalisé en un matériau transparent ou translucide. Dans ce cas, une couche peinture est par exemple appliquée sur la face externe 26 de sorte à conférer un aspect particulier à l'élément de revêtement 4 et pour empêcher de voir le corps principal 2 au travers de l'élément de revêtement 4. Dans ce cas également, au moins une ouverture 30 est réalisée dans la couche de peinture dans la zone où l'on souhaite laisser passer la lumière, c'est-à-dire en regard du dispositif d'éclairage 28, comme cela sera décrit plus en détail ultérieurement. Selon un mode de réalisation, comme représenté sur les Figs 1 et 2, plusieurs ouvertures 30 sont réalisées dans la zone dans laquelle on souhaite passer la lumière de sorte à former un motif lumineux particulier dans cette zone lorsque le dispositif d'éclairage 28 est allumé. Selon un mode de réalisation, plusieurs zones comprenant au moins une ouverture 30 sont formées lorsque plusieurs dispositifs d'éclairage 28 sont interposés entre le corps principal 2 et l'élément de revêtement 4. Ainsi, pour l'élément de revêtement central 4a, deux dispositifs d'éclairage 28 sont par exemple prévus au niveau des zones latérales de la branche inférieure 20 et des ouvertures 30 sont formées dans ces zones latérales afin de laisser passer la lumière des deux dispositifs d'éclairage 28 formant les feux arrière du véhicule. La ou les ouvertures 30 sont par exemple réalisées par ablation laser dans la couche de peinture de l'élément de revêtement 4.

En variante, l'élément de revêtement 4 peut être réalisé en un matériau opaque en dehors de la ou des parties s'étendant en regard d'un dispositif d'éclairage. Lorsqu'aucun dispositif d'éclairage n'est prévu entre le corps principal 2 et un élément de revêtement 4, cet élément de revêtement 4 peut être réalisé entièrement en un matériau opaque.

Dans tous les cas, l'élément de revêtement 4 est agencé pour conférer son aspect à la partie de l'élément de garnissage extérieur 1 dans laquelle l'élément de revêtement 4 s'étend.

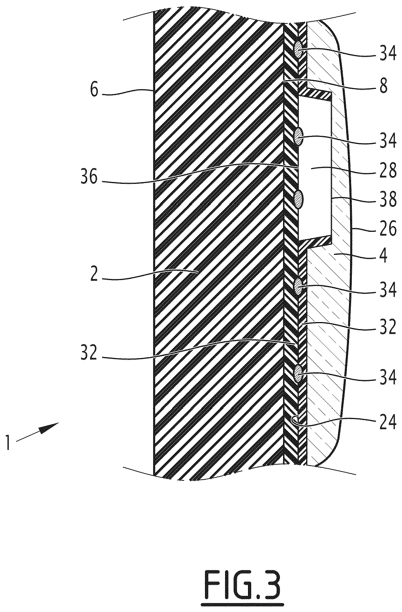

Comme indiqué précédemment, l'élément de revêtement 4 est collé sur la face externe 8 du corps principal 2. Plus particulièrement, comme représenté sur la Fig. 3 l'élément de revêtement 4 est collé sur la face externe 8 par l'intermédiaire d'au moins une couche de liaison 32 et d'une colle 34 interposés entre la face externe 8 du corps principal 2 et la face interne 24 de l'élément de revêtement 4.

Selon un mode de réalisation, le couche de liaison 32 est appliqué sur la face externe 8 du corps principal 2 et la colle 34 est interposée entre la couche de liaison 32 et la face interne 24 de l'élément de revêtement 4. En variante, la couche de liaison 32 est appliqué sur la face interne 24 de l'élément de revêtement 4 et la colle 34 est interposée entre la couche de la liaison 32 et la face externe 8 du corps principal 2. Selon un mode de réalisation particulièrement avantageux et comme représenté sur la Fig. 3, la colle 34 s'étend entre une couche de liaison 32 et une couche de liaison 32 additionnelle, l'une étant appliquée sur la face externe 8 du corps principal 2 et l'autre étant appliquée sur la face interne 24 de l'élément de revêtement 4.

La couche de liaison 32 est par exemple appliquée sur une zone étendue, par exemple sur l'ensemble, de la face externe 8 du corps principal 2 et/ou sur la face interne 24 de l'élément de revêtement 4, et la colle 34 est par exemple appliquée sous la forme d'un ou plusieurs cordons sur la couche de liaison 32. Ainsi, la couche de liaison 32 sert de surface de support pour la colle 34.

La couche de liaison 32 est désactivable par apport de chaleur. Par « désactivable par apport de chaleur », on entend que lorsque la couche de liaison 32 est chauffée à une température supérieure à un seuil prédéterminé, elle perd sa faculté à retenir la colle 34 et entraîne ainsi une séparation des éléments collés entre eux par l'intermédiaire de la couche de liaison 32 et de la colle 34. A cet effet, la couche de liaison 32 comprend par exemple un agent dégradable par apport de chaleur, c'est-à-dire que l'agent dégradable est agencé pour se dégrader au-delà d'un seuil de température prédéterminé et ainsi entraîner la perte d'adhésion entre la colle 34 et la surface de la couche de liaison 32 sur laquelle est appliquée la colle 34. Plus particulièrement, l'agent dégradable est par exemple agencé pour se décomposer sous l'effet de la chaleur et générer un gaz se dégageant vers la surface la couche de liaison 32, le gaz séparant la colle 34 de la couche de liaison 32. En variante, l'agent dégradable est agencé pour être détruit sous l'effet de la chaleur et entraîner une perte de cohésion de la couche de liaison 32, ce qui entraîne la destruction du support pour la colle 34. Selon un mode de réalisation, la couche de liaison 32 comprend une base polymère, par exemple une matrice époxy, une matrice acrylate, une matrice polyuréthane ou une matrice silicone. L'agent dégradable est formé par un acide polycarboxylique, générant un gaz sous l'effet de la chaleur, ou par des microbilles de verre, se détruisant sous l'effet de la chaleur intégrés, dans la base polymère. Le seuil de température entraînant la dégradation de l'agent dégradable est par exemple sensiblement compris entre 150°C et 220°C.

La colle 34 est une colle conventionnelle pour assurer une fixation robuste de l'élément de revêtement 4 sur la face externe 8 du corps principal 2. Plus particulièrement, la colle 34 est suffisamment robuste pour empêcher tout décollement involontaire de l'élément de revêtement 4 en l'absence d'une température supérieure au seuil de température entraînant la désactivation de la couche de liaison 32. A cet effet, la colle 34 est par exemple une colle bi-composant polyuréthane.

Ainsi, en chauffant l'élément de garnissage extérieur 1 à une température supérieure au seuil de température prédéterminé, il est possible de séparer la couche de liaison 32 de la colle 34 et ainsi de séparer l'élément sur lequel la couche de liaison 32 est appliquée de la colle 34, ce qui entraîne la séparation des éléments collés entre eux.

Il convient de noter que l'élément de revêtement 4 est fixé sur le corps principal 2 uniquement au moyen de la couche de liaison 32 et de la colle 34 décrits ci-dessus. En d'autres termes, la fixation de l'élément de revêtement 4 sur le corps principal 2 ne nécessite pas d'élément de fixation mécanique supplémentaire. Ainsi, pour séparer l'élément de revêtement 4 du corps principal 2, il suffit de chauffer l'ensemble de l'élément de garnissage extérieur 1 à une température supérieure au seuil de température, ce qui entraîne la séparation de l'élément de revêtement 4 du corps principal 2 de sorte que le corps principal 2 d'une part et l'élément de revêtement 4 d'autre part peuvent être récupérés pour être remplacés ou recyclé. Lorsque la colle 34 s'étend entre deux couches de liaison 32, comme décrit précédemment, le chauffage de l'élément de garnissage extérieur 1 permet également de séparer la colle 34 du corps principal 2 et de l'élément de revêtement 4, ce qui facilite encore le recyclage de ces éléments en ne nécessitant pas une étape supplémentaire pour retirer la colle 34 de la face interne 24 de l'élément de revêtement 4 ou de la face externe 8 du corps principal 2.

Lorsque l'élément de garnissage extérieur 1 comprend d'autres éléments que le corps principal 2 et un ou plusieurs éléments de revêtement 4, ces éléments additionnels sont également fixés sur le corps principal 2 au moyen d'au moins une couche de liaison 32 et d'une colle 34 comme décrit précédemment de sorte que ces éléments additionnels peuvent également être séparés du corps principal 2 par simple chauffage de l'élément de garnissage extérieur 1. Ainsi, dans le cas d'un hayon arrière tel que décrit précédemment, la vitre 10 et le ou les dispositifs d'éclairage 28 sont fixés sur le corps principal 2 par l'intermédiaire d'au moins une couche de liaison 32 et d'une colle 34. La fixation du ou des dispositifs d'éclairage 28 va à présent être décrite plus en détail.

Chaque dispositif d'éclairage 28 comprend une face interne 36, tournée vers la face externe 8 du corps principal 2 et une face externe 38 tournée vers l'extérieur du véhicule. Le dispositif d'éclairage 28 est agencé pour émettre de la lumière vers l'extérieur du véhicule, par exemple pour former un feu arrière, un feu stop ou un feu de signalisation clignotant à l'arrière du véhicule. En variante ou en complément, le dispositif d'éclairage 28 peut être utilisé pour former un motif lumineux à caractère esthétique sur la face externe 26 de l'élément de revêtement 4.

Comme indiqué précédemment, le dispositif d'éclairage 28 est interposé entre la face externe 8 du corps principal 2 et la face interne 24 de l'élément de revêtement 4 de sorte que la lumière émise par le dispositif d'éclairage 28 traverse l'élément de revêtement 4 et est visible depuis l'extérieur de l'élément de garnissage extérieur 1, par exemple au travers de la ou des ouvertures 30 réalisées dans la couche de peinture appliquée sur la face externe 26 de l'élément de revêtement 4. En d'autres termes, la ou les ouvertures 30 s'étendent en regard d'au moins une partie du dispositif d'éclairage 28 pour laisser passer la lumière émise par celui-ci au travers de l'élément de revêtement 4. La ou les ouvertures 30 peuvent être agencées pour former un motif lumineux particulier sur la face externe 26 de la couche de revêtement 4, par exemple en alternant zones ouvertes et zones de couche de peinture afin de former une grille lumineuse sur la face externe 26 de la couche de revêtement 4, comme visible sur la Fig. 2

Il convient de noter qu'ainsi, l'élément de revêtement 4 est utilisé pour former la lentille du dispositif d'éclairage 28, de sorte que la structure de celui-ci peut être simplifiée en ne comprenant pas une telle lentille, comme c'est habituellement le cas lorsque le dispositif d'éclairage 28 est intégré dans un boîtier séparé fixé sur le corps principal 2 et entouré par un ou plusieurs éléments de revêtement. Ainsi, le collage du dispositif d'éclairage 28 sur le corps principal 2 et l'utilisation de l'élément de revêtement 4 comme lentille du dispositif d'éclairage 28 permet également de simplifier l'assemblage de l'élément de garnissage extérieur 1. En effet, grâce à l'invention, il n'est pas nécessaire de gérer le problème du jeu et de l'affleurement entre le dispositif d'éclairage et le ou les éléments de revêtement entourant le dispositif d'éclairage qui se pose lorsque le dispositif d'éclairage est intégré dans un boîtier avec un ou plusieurs éléments de revêtement s'étendant autour de la lentille du dispositif d'éclairage, comme cela est réalisé de façon traditionnelle lorsque l'élément de garnissage extérieur comprend un ou plusieurs dispositifs d'éclairage.

Pour fixer le dispositif d'éclairage 28 sur la face externe 8 du corps principal 2, la couche de liaison 32 appliquée sur la face externe 8 du corps principal 2 pour fixer l'élément de revêtement 4 peut être utilisée avec au moins un cordon de colle 34 interposé entre la face interne 36 du dispositif d'éclairage 28 et cette couche de liaison 32, comme représenté sur la Fig. 3. En d'autres termes, une couche de liaison 32 unique peut être appliquée sur l'ensemble de la face externe 8 du corps principal 2 pour fixer l'ensemble des éléments prévus sur cette face externe 8 avec des cordons de colle 34 prévus aux emplacements de la couche de liaison 32 où des éléments rapportés doivent être fixés sur la face externe 8. En variante, la couche de liaison 32 est appliqué sur la face interne 36 du dispositif d'éclairage 28 et la colle 34 est interposée entre la face externe 8 du corps principal 2 et la couche de liaison 32. Avantageusement, la colle 34 s'étend entre la couche de liaison 32 appliquée sur la face externe 8 du corps principal 2 et une couche de liaison 32 additionnelle appliquée sur la face interne 36 du dispositif d'éclairage 28 de sorte que la colle 34 peut être séparé du corps principal 2 et du dispositif d'éclairage 28 lorsque l'élément de garnissage extérieur 1 est chauffé, comme décrit précédemment.

Selon un mode de réalisation, la face interne 24 de l'élément de revêtement 4 est appliqué directement sur la face externe 38 du dispositif d'éclairage 28, c'est-à-dire sans couche de liaison ni colle entre le dispositif d'éclairage 28 et l'élément de revêtement 4 de sorte que la lumière émise par le dispositif d'éclairage 28 est transmise directement au travers de l'élément de revêtement 4 sans traverser une couche de liaison. Dans ce cas, la face interne 24 de l'élément de revêtement 4 est fixée à la face externe 8 du corps principal 2 autour du dispositif d'éclairage 28.

Comme l'élément de revêtement 4, le dispositif d'éclairage 28 est fixé au corps principal 2 uniquement au moyen d'au moins une couche de liaison 32 et d'une colle 34, c'est-à-dire sans élément de fixation mécanique supplémentaire de sorte que la séparation du dispositif d'éclairage 28 du corps principal 2 peut être obtenu par simple chauffage de l'élément de garnissage extérieur 1 à une température supérieure au seuil de température prédéterminé.

Comme représenté sur la Fig. 1, dans le cas d'un hayon arrière, au moins deux dispositifs d'éclairage 28 sont par exemple fixés entre la bord inférieur 8 du corps principal 2 et l'élément de revêtement central 4a pour former les feux arrière et/ou des feux de signalisation clignotants et un dispositif d'éclairage 28 supplémentaire est par exemple fixé entre la branche supérieure 10 du corps principal 2 et l'élément de revêtement supérieur 4c.

L'assemblage et le démontage de l'élément de garnissage extérieur 1 selon l'invention sont donc particulièrement simple du fait de l'absence d'éléments de fixation mécanique. En outre, du fait de cette absence, l'élément de garnissage extérieur 1 est également allégé. Grâce à la désactivation de la couche de liaison 32 par apport de chaleur, les différents éléments constitutifs de l'élément de garnissage extérieur 1 peuvent être séparés sans dégrader ceux-ci, notamment à des fins de réparabilité et/ou de recyclage de ces différents éléments constitutifs.

## Revendications

1. Elément de garnissage extérieur (1) de véhicule comprenant :
- un corps principal (2) comprenant une face externe (8) destinée à être tournée vers l'extérieur du véhicule,
- au moins un élément de revêtement (4) s'étendant entre une face interne (24), tournée vers la face externe (8) du corps principal (2), et une face externe (26), opposée à la face interne (24) et destinée à être tournée vers l'extérieur du véhicule, l'élément de revêtement (4) s'étendant sur au moins une partie de la face externe (8) du corps principal (2),
**caractérisé en ce que** l'élément de revêtement (4) est collé sur le corps principal (2) par l'intermédiaire d'au moins une couche de liaison (32) et d'une colle (34) interposées entre la face externe (8) du corps principal (2) et la face interne (24) de l'élément de revêtement (4), ladite couche de liaison (32) étant désactivable par apport de chaleur de sorte à permettre de séparer la face interne (24) de l'élément de revêtement (4) et/ou la face externe (8) du corps principal (2) de la colle (34) et à désassembler l'élément de revêtement (4) du corps principal (2) par chauffage de l'élément de garnissage extérieur.

2. Elément de garnissage extérieur selon la revendication 1, dans lequel la couche de liaison (32) est appliquée sur la face externe (8) du corps principal (2), respectivement sur la face interne (24) de l'élément de revêtement (4), la colle (34) s'étendant entre la couche de liaison (32) et la face interne (24) de l'élément de revêtement (4), respectivement la face externe (8) du corps principal (2).

3. Elément de garnissage extérieur selon la revendication 2, dans lequel une couche de liaison (32) additionnelle est appliquée sur la face interne (24) de l'élément de revêtement (4), respectivement sur la face externe (8) du corps principal (2), la colle (34) s'étendant entre la couche de liaison (32) appliquée sur la face externe (8) du corps principal (2), respectivement sur la face interne (24) de l'élément de revêtement (4), et la couche de liaison (32) additionnelle, ladite couche de liaison (32) additionnelle étant désactivable par apport de chaleur.

4. Elément de garnissage extérieur selon l'une quelconque des revendications 1 à 3, comprenant en outre un dispositif d'éclairage (28) s'étendant entre une face interne (36), tournée vers la face externe (8) du corps principal (2), et une face externe (38), opposée à la face interne (36) et tournée vers la face interne (24) de l'élément de revêtement (4), ledit dispositif d'éclairage (28) étant collé sur le corps principal (2) par l'intermédiaire d'une couche de liaison (32) et d'une colle (34) interposées entre la face externe (8) du corps principal (2) et la face interne (36) du dispositif d'éclairage (28), ladite couche de liaison (32) étant désactivable par apport de chaleur.

5. Elément de garnissage extérieur selon la revendication 4, dans lequel au moins une partie de l'élément de revêtement (4) s'étend sur la face externe (38) du dispositif d'éclairage (28), au moins ladite partie de l'élément de revêtement (4) laissant passer la lumière de la face interne (24) à la face externe (26) de l'élément de revêtement (4), de sorte que la lumière émise par le dispositif d'éclairage (28) est visible du côté de la face externe (26) de l'élément de revêtement (4).

6. Elément de garnissage extérieur selon la revendication 5, dans lequel l'élément de revêtement (4) est réalisé au moins en partie en un matériau transparent ou translucide.

7. Elément de garnissage extérieur selon la revendication 6, dans lequel une couche de peinture est appliquée sur la face externe (26) de l'élément de revêtement (4), ladite couche de peinture comprenant au moins une ouverture traversante (30) s'étendant en regard d'au moins une partie du dispositif d'éclairage (28), la lumière émise par ledit dispositif d'éclairage (28) traversant l'élément de revêtement (4) et étant visible par ladite ouverture traversante (30).

8. Elément de garnissage extérieur selon l'une quelconque des revendications 1 à 7, dans lequel la couche de liaison (32) comprend un agent dégradable par apport de chaleur, ledit agent dégradable se dégradant sous l'effet d'une température supérieure à un seuil de température prédéterminé et entraînant une perte d'adhésion entre l'adhésif (34) et la surface de la couche de liaison (32) sur laquelle est appliquée la colle (34).

9. Elément de garnissage extérieur selon l'une quelconque des revendications 1 à 8, comprenant une pluralité d'éléments de revêtement (4a, 4b, 4c), chaque élément de revêtement (4a, 4b, 4c) étant collé sur une partie distincte de la face externe (8) du corps principal (2).

10. Elément de garnissage extérieur selon l'une quelconque des revendications 1 à 9, formant un hayon arrière de véhicule.
